# EUROPEAN PATENT SPECIFICATION

(11) **EP 1 409 884 B1**
(45) Date of publication and mention of the grant of the patent: **06.05.2009**
(21) Application number: 02733695.7
(22) Date of filing: 16.05.2002
(51) Int. Cl.: F16D 55/228, F16D 65/22

(54) **DISC BRAKE**
SCHEIBENBREMSE
FREIN A DISQUE

(30) Priority: 13.07.2001 SE 0102534
(43) Date of publication of application: 21.04.2004
(73) Proprietor: Volvo Truck Corporation, 405 08 Göteborg (SE)
(72) Inventor: HULTEN, Johan, S-413 16 Göteborg (SE); DAGH, Ingemar, S-413 18 Göteborg (SE)
(74) Representative: Fröhling, Werner Otto
(86) International application number: PCT/SE2002/000936
(87) International publication number: WO 2003/042565

(56) References cited:
- EP-A- 0 995 923
- WO-A1-92/07202
- GB-A- 1 152 712
- GB-A- 2 045 877
- GB-A- 2 097 497
- US-A- 3 494 448
- US-A- 4 061 208
- US-A- 4 142 611
- US-A- 4 442 930
- US-A- 5 472 068
- US-A- 5 551 536

## Description

### TECHNICAL FIELD

The present invention relates to a disc brake for heavy commercial vehicles such as trucks and buses.

### BACKGROUND

Disc brakes are now commonly used on heavy vehicles, even if they were introduced relatively recently compared to their use in passenger vehicles and other light vehicles, where disc brake technology has long been well established.

The main type of disc brake for heavy vehicles is pneumatically activated and comprises a conventional so-called floating brake caliper over a brake disc rotating with the wheel axle, and a holder for two brake linings. The holder has support surfaces for taking up the forces to which the brake linings are exposed during braking. The brake is generally activated by a piston rod from a pneumatically driven brake cylinder pressing upon a lever which transmits the force via a force transmission mechanism to two brake pistons which in turn press against one of the brake linings. In this case, force is also transmitted in a known manner to the other, opposite brake lining via the floating brake caliper, resulting in the brake linings being pressed against both sides of the brake disc. An adjustment mechanism is designed to continuously compensate for the wear of the brake linings during use.

The conventional disc brake described above has many good properties such as good reliability, low vibrations and low noise level. It also has a high degree of resistance to crack formation as a result of the relatively heavy and powerful brake caliper. However, the design is also associated with a number of disadvantages. One important disadvantage is that heat is transmitted directly from the brake linings to the brake journals and onward into the sensitive force transmission mechanism. The brake pistons are generally sealed off against dirt and damp by means of grease and sealing bellows made of rubber or some other flexible material, which after some time tend to become damaged by the high degree of heat.

Another disadvantage is that the floating brake caliper has to easily slide so that the brake can function satisfactorily. The brake caliper also supports the activating mechanism, the adjustment mechanism and the brake cylinder, for which reason the mass of the floating part is great. The great mass results in great stresses on the suspension bushings of the brake caliper when the brake is exposed to vibrations from the road surface, which results in increased wear of the suspension bushings.

Moreover, the brake caliper, the brake linings and the brake pistons are all arranged to be able to slide, which involves a large number of expensive function surfaces. During braking, very high stresses also arise on these slide surfaces, which, in addition to causing increased wear, also means that the function surfaces have to be given substantial dimensions. At the surface between brake lining and brake-lining holder, there is also a sliding of metal against metal.

Finally, the whole brake disc has to be dismantled in order for the wheel hub to be able to be subsequently dismantled, which represents a disadvantage in terms of maintenance.

GB-A-1 152 712 discloses a carrier-free disc brake where a piston is used to press the linings against the brake disc. The piston is forced towards the brake disc by action of a cam acting directly on the piston and is in contact with the holder of the lining in an area which is heated during braking.

DISCLOSURE OF THE INVENTION Against the background of the abovementioned disadvantages of the conventional disc brake, a need has been identified for a novel disc brake design, which avoids said disadvantages. The invention therefore makes available a disc brake in accordance with attached claim 1.

The brake-lining holders are both arranged so as to slide along two mutually substantially parallel suspension axles, which are likewise substantially parallel to the wheel axle and are secured in the wheelaxle housing.

In an expedient embodiment, the brake-lining holders have attachment seats for said brake linings, which attachment seats are placed at a distance from said actuation surfaces.

In an advantageous embodiment of the invention, an outer brake-lining holder is designed such that, in the axial direction of the wheel axle, it at least partially surrounds an inner brake-lining holder. The actuation surface of the inner brake-lining holder is in this case directed toward a corresponding actuation surface of the outer brake-lining holder.

The previously mentioned activating mechanism is preferably axially fixed in relation to the wheel-axle housing and comprises a separating member acting between said actuation surfaces for the purpose of mutual axial displacement of the brake-lining holders. The separating member consists of a cam element, which cam element is rotatable about a camshaft extending substantially at right angles to the wheel axle. In an expedient embodiment, the cam element consists of a so-called S-cam. The cam element can also consist of a so-called Z-cam or a cam profile of involute type. Alternatively, the separating member can also have a wedge-shaped cross section.

In a suitable embodiment, needle-roller bearings are placed between the cam element and the actuation surfaces.

Moreover, in an expedient embodiment, an activating lever is connected in a rotationally fixed manner to the camshaft. The activating lever has an end portion designed for actuation of an actuator rod from a power member, such as a pneumatic actuator cylinder, or alternatively an angled gear or other type of gear can also be used to turn the camshaft.

Finally, in a maintenance-friendly embodiment, the outer brake-lining holder is articulated so that it can be pivoted upward about one of the suspension axles between a downwardly pivoted operating position and an upwardly pivoted maintenance position for replacing the brake linings.

### DESCRIPTION OF THE FIGURES

Embodiments of the invention will be described in greater detail below with reference to the attached drawings, in which:
- Fig. 1: shows a partially cutaway top view of a preferred embodiment of the disc brake according to the invention. The brake is shown in the unactivated position;
- Fig. 2: shows a partial sectional view taken along the dot-and-dash line II-II in Fig. 1. The sectional view shows a separating member in the form of an S-shaped cam element;
- Fig. 3: shows a partial sectional view taken along the dot-and-dash line III-III in Fig. 1. The sectional view shows the activating lever in cutaway view;
- Fig. 4: shows a view corresponding to that in Fig. 1, but with the disc brake shown here in its activated position;
- Fig. 5: shows a simplified sectional view of the disc brake, where the outer brake-lining holder is shown in a downwardly pivoted operating position and in an upwardly pivoted maintenance position, respectively;
- Fig. 6: shows a partial sectional view of a cam element according to an alternative embodiment, and
- Fig.7: shows, finally, a partial sectional view of a cam element according to another alternative embodiment.

### DESCRIPTION OF PREFERRED EMBODIMENTS

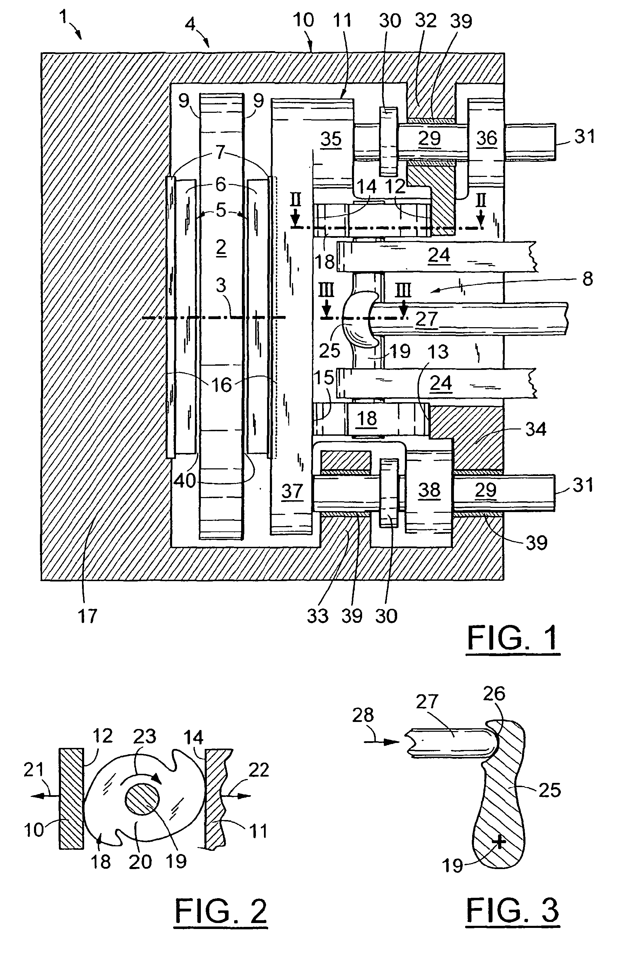

Reference number 1 in Fig. 1 designates generally a disc brake according to the invention for land vehicles, in particular for heavy commercial vehicles such as trucks and buses.

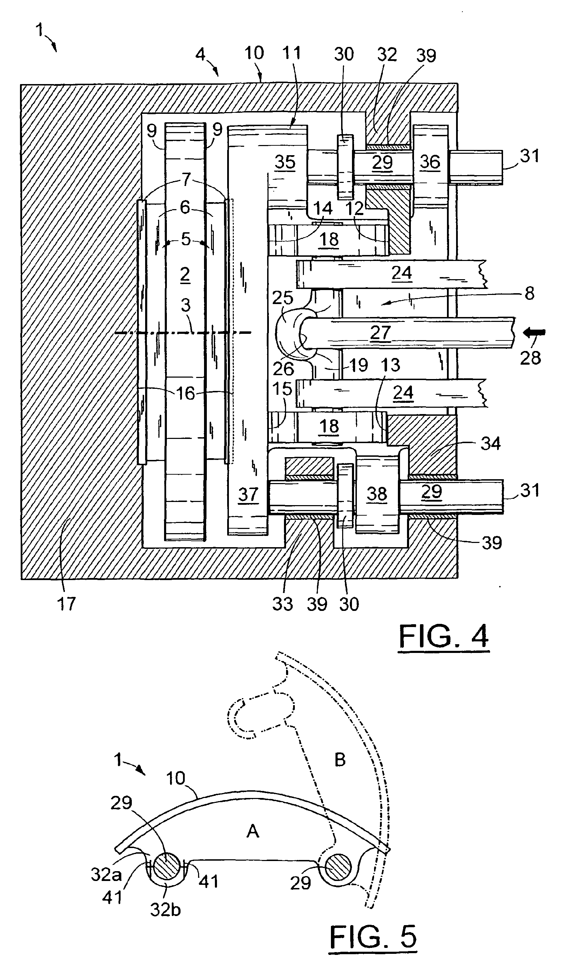

The disc brake 1 comprises a brake disc 2 which rotates a with a wheel axle 3. The wheel axle 3 is indicated only by a dot-and-dash line in Fig. 1 and in Fig. 4. The brake disc 2 is of a conventional type and is only drawn diagrammatically in the figure, for which reason it can, for example, have ventilation orifices (not shown) and can be fixed in terms of rotation to the wheel axle 3 by a spline coupling (not shown).

The disc brake 1 also comprises a brake caliper 4, which is mounted in a movable manner in a nonrotating wheel-axle housing (not shown) secured to the vehicle and arranged about said wheel axle 3. The term wheel-axle housing here includes both rear-axle housing and spindles and steerable spindles (not shown).

Two brake linings 5, one on each side of the brake disc 2, are also held in place by the brake caliper 4. The brake linings 5 each consist in a conventional manner of a friction plate 6 made of a material with high heat resistance, and of a support plate 7, usually made of metal, which is secured to the rear, i.e. on that side of the brake lining 5 facing away from the brake disc 2. In an alternative embodiment (not shown), the friction plate 6 can be used without support plate 7. The brake linings 5 are designed in such a way that, when acted upon by an activating mechanism 8, they are caused to bear against the sides 9 of the brake disc 2 for transmitting a braking torque to the wheel axle 3.

According to the invention, the brake caliper 4 comprises two brake-lining holders 10, 11 which are axially displaceable relative to one another and relative to the wheel-axle housing (not shown). As can be seen from Fig. 1, an outer brake-lining holder 10 is designed such that, in the axial direction of the wheel axle 3, it completely surrounds an inner brake-lining holder 11. However, in an alternative embodiment (not shown), the outer brake-lining holder 10 can instead be designed such that it only partially surrounds the inner brake-lining holder 11. The outer brake-lining holder 10 is caliper-shaped and extends with an overhanging portion 17 over the brake disc 2. In this respect, the outer brake-lining holder 10, viewed from the outside, resembles a traditional brake caliper, despite the fact that its function differs from a traditional brake caliper.

The brake-lining holders 10, 11 each have two actuation surfaces 12, 13 and 14, 15, respectively, for engagement with said activating mechanism 8, by which means the brake-lining holders 10, 11 are displaced toward each other and toward the brake disc 2 upon activation. The brake-lining holders 10, 11 are further provided with attachment seats 16 the brake linings 5, which attachment seats 16 are placed at a distance from said actuation surfaces 12, 13, 14, 15. This arrangement avoids substantial heat transfer from the brake linings 5 directly to the activating mechanism 8, which, compared to conventional disc brakes, is a great advantage from the point of view of operational reliability.

The actuation surfaces 14, 15 of the inner brake-lining holder 11 are directed toward corresponding actuation surfaces 12, 13 of the outer brake-lining holder 10. This is made possible by the fact that the outer brake-lining holder 10 surrounds or "overlaps" the one inner brake-lining holder 11 in the manner described above. The brake-lining holders 10, 11 are thus displaced toward each other when the actuation surfaces 12, 13, 14, 15 are forced apart, for which reason the activating mechanism 8 according to the invention comprises two separating members 18 acting between said actuation surfaces 12, 13, 14, 15 for the purpose of mutual axial displacement of the brake-lining holders 10, 11 in the axial direction of the wheel axle 3.

In the illustrative embodiment shown, the separating members 18 consist of cam elements which are rotatable about a camshaft 19. As can be seen from Figures 1 and 4, the camshaft 19 extends at right angles to the wheel axle 3. The camshaft 19 is mounted with bearing bushings (not shown) in two holder arms 24 which extend in parallel and are secured in the wheel-axle housing (not shown). By means of the holder arms 24, the activating mechanism 8 is axially fixed in relation to the wheel-axle housing (not shown).

In Fig. 2, which is a sectional view along the dot-and-dash line II-II in Fig. 1, it will be seen that the cam element 18 has a substantially S-shaped cross section, with the camshaft 19 placed in the central portion 20 of the S. A cam element such as this is normally called an S-cam. The figure shows diagrammatically how the actuation surfaces 12, 14 of the brake-lining holders 10, 11 are forced apart in the mutually opposed directions of the arrows 21, 22 when the cam element 18 is rotated about the camshaft 19 in the direction of the arrow 23.

An activating lever 25 is connected in a rotationally fixed manner to the camshaft 19, and, in the illustrative embodiment shown, the camshaft 19 and the activating lever 25 are formed integrally by being forged from the same piece. As will be seen from Fig. 3, the activating lever 25 has a substantially cup-shaped free end portion 26 designed for actuation by an actuator rod 27 in the direction of the arrow 28 from a power member (not shown). The power member can consist, for example, of a pneumatically driven actuator cylinder (not shown). Alternatively, other power members can also be used, such as hydraulically or electrically driven actuator members (not shown).

In Fig. 1 and Fig. 4, it will also be seen that the brake-lining holders 10, 11 in this illustrative embodiment are both arranged so as to slide along two mutually parallel suspension axles 29 which are likewise parallel to the wheel axle 3 and are secured in the wheel-axle housing (not shown) by means of two securing lugs 30 and in the inner end portions 31 of the suspension axles 29. Alternatively, the suspension axles can be secured either by means of the securing lugs 30, at the end portions 31 or in another way along the suspension axles 29. The brake-lining holders 10, 11 are in this case provided with slide sleeves 32, 33, 34, 35, 36, 37, 38 which, by means of slide bearing bushings 39, slide along the two suspension axles 29. In alternative embodiments (not shown), other types of slide bearing bushings 39 can be replaced by other types of bearing elements, such as axial bearings provided with rolling bodies. On the outer brake-lining holder 10, the actuation surfaces 12, 13 are placed on the slide sleeves 32 and 34, respectively.

In order to illustrate the pattern of movement of the disc brake 1, reference is now made to Figures 1 and 4. Fig. 1 thus shows the disc brake 1 in its unactivated position, in which a gap 40 can be seen between the brake disc 2 and the brake linings 5. The activating lever 25 is located in a substantially upright position. In Fig. 4, by contrast, the disc brake 1 has been activated by means of the actuator rod 27 pressing on the activating lever 25, whereupon the latter assumes an inclined position and rotates the camshaft 19. The cam elements 18 are also rotated in such a way that they force the opposing actuation surfaces 12, 13, 14, 15 of the brake-lining holders 10, 11 apart, as has previously been described with reference to Figures 2 and 3. By virtue of the outer brake-lining holder 10 overlapping the inner brake-lining holder 11, the brake-lining holders 10, 11 are displaced toward each other when the actuation surfaces 12, 13, 14, 15 are forced apart, the brake linings 5 being caused to bear against the brake disc 2.

Fig. 5 shows a simplified sectional view of the disc brake 1, where the outer brake-lining holder 10 can be moved in an advantageous manner from a a downwardly pivoted operating position "A" to an upwardly pivoted maintenance position "B" (shown by dot-and-dash lines), by means of the slide sleeve 32 being divided into a fixed part 32a and a part 32b which can be detached via bolts 41. For upward pivoting, the bolts 41 are thus unscrewed, and the detachable part 32b of the slide sleeve 32 is removed from the fixed part 32a, and the outer brake-lining holder 10, which is now freely articulated about one of the suspension axles 29, is pivoted upward to its maintenance position. This makes it much easier to replace the brake linings 5, and at the same time the rest of the disc brake becomes easily accessible for inspection and maintenance. A further advantage of this solution is that the disc brake 1 does not have to be removed to permit removal of the wheel hub (not shown).

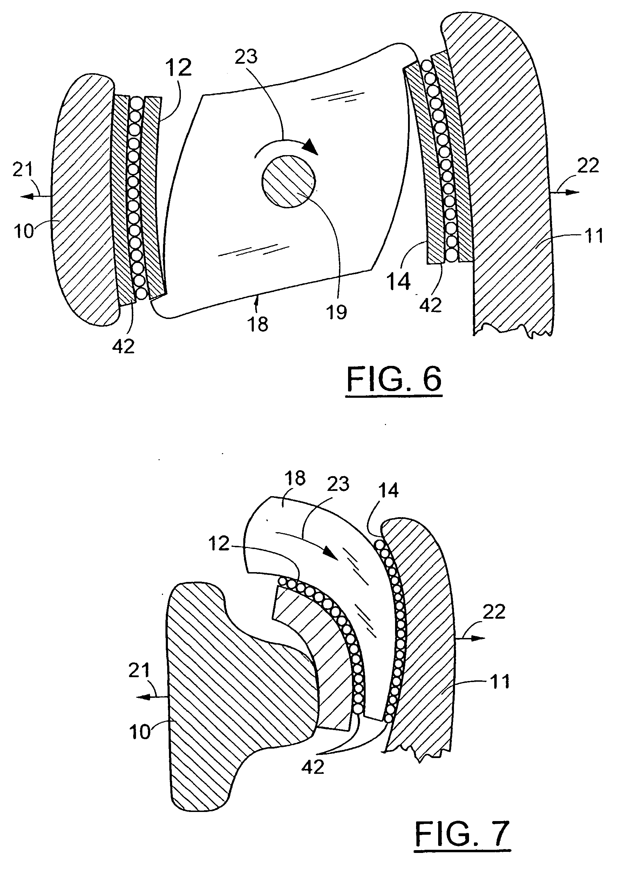

Fig. 6 shows an alternative embodiment of the cam element 18 in analogy with Fig. 2. This cam element 18 is also by definition of the so-called S-cam type, even if the S shape is not as clear as in Fig. 2. The cam element 18 is shown in maximum deployment. Needle-roller bearings 42 are placed between the cam element 18 and the actuation surfaces 12, 14 in order to reduce the frictional resistance of the activating mechanism 8.

Finally, Fig. 7 shows a partial sectional view of a cam element 18 according to another alternative embodiment. Here, the cam element 18 has a curved, wedge-shaped cross section. The wedge-shaped cam element 18 is designed for actuation by a power member (not shown) which displaces the cam element 18 in the direction of the arrow 23. Here too, needle-roller bearings 42 are placed between the cam element 18 and the actuation surfaces 12, 14. Friction-reducing elements other than needle bearings are of course conceivable for this purpose. For example, the actuation surfaces 12, 14 can be lined with a layer of low-friction material, so that a slide bearing is thus obtained (not shown).

In another embodiment (not shown), the cam element 18 can consist of a so-called Z-cam, where the cam element 18 has a more pronounced Z-shaped cross section.

The invention is not limited to the illustrative embodiments described above and shown in the drawings, and instead it can be freely varied within the scope of the attached patent claims. For example, the brake-lining holders 10, 11 can be provided with more actuation surfaces 12, 13, 14, 15 than are shown in the illustrative embodiments described here. However, the brake-lining holders 10, 11 are always each provided with at least one actuation surface. Furthermore, for reasons of clarity, the illustrative embodiment shown in Fig. 1 and Fig. 4 has been drawn without an adjustment mechanism for continuous compensation of the wear of the brake linings 5. However, it goes without saying that such an adjustment mechanism is also present on the disc brake according to the invention, and it can be designed in a number of different, previously known ways.

## Claims

1. A disc brake (1) for heavy commercial vehicles, comprising:
- a brake disc (2) rotating with a wheel axle (3);
- a brake caliper (4) which is mounted in a movable manner in a nonrotating wheel-axle housing arranged about said wheel axle (3),
- two brake linings (5), one on each side of the brake disc (2), said brake linings (5) being designed in such a way that, when acted upon by an activating mechanism (8), they are caused to bear against the sides (9) of the brake disc (2) for transmitting a braking torque to the wheel axle (3);
- said brake caliper (4) comprising two brake-lining holders (10, 11) which are axially displaceable relative to one another and relative to the wheel-axle housing (3), **characterized in that:**
- the brake-lining holders (10, 11) each have at least one actuation surface (12, 13, 14, 15) for engagement with said activating mechanism (8), as a result of which the brake-lining holders,(10, 11) are displaced toward each other upon activation;
- the brake-lining holders (10, 11) are both arranged so as to slide along two mutually parallel suspension axles (29) which are likewise parallel to the wheel axle (3) and are secured in the wheel-axle housing; and
- the at least one actuation surface (12, 13, 14, 15) is arranged between the two mutually parallel suspension axles (29).

2. The disc brake (1) as claimed in patent claim 1, **characterized in that** the brake-lining holders (10,11) have attachment seats (16) for said brake linings (5), which attachment seats (16) are placed at a distance from said actuation surfaces (12,13, 14,15).

3. The disc brake (1) as claimed in patent claim 1 or 2, **characterized in that** an outer brake-lining holder (10) is designed such that, in the axial direction of the wheel axle (3), it at least partially surrounds an inner brake-lining holder (11).

4. The disc brake (1) as claimed in patent claim 3, **characterized in that** the actuation surface (14, 15) of the inner brake-lining holder (11) is directed toward a corresponding actuation surface (12, 13) of the outer brake-lining holder (10).

5. The disc brake (1) as claimed in patent claim 4, **characterized in that** said activating mechanism (8) is axially fixed in relation to the wheel-axle housing (not shown) and comprises a separating member (18) acting between said actuation surfaces (12,13, 14,15) for the purpose of mutual axial displacement of the brake-lining holders (10,11).

6. The disc brake (1) as claimed in patent claim 5, **characterized in that** said separating member (18) consists of a cam element, which cam element is rotatable about a camshaft (19) extending substantially at right angles to the wheel axle (3).

7. The disc brake (1) as claimed in patent claim 6, **characterized in that** said cam element (18) is a so-called S-cam.

8. The disc brake (1) as claimed in patent claim 6, **characterized in that** said cam element is a so-called Z-cam.

9. The disc brake (1) as claimed in patent claim 6, **characterized in that** said cam element (18) has a wedge-shaped cross section.

10. The disc brake (1) as claimed in patent claim 6, 7, 8 or 9, **characterized in that** needle-roller bearings(42) are placed between the cam element (18) and the actuation surfaces (12, 13,14, 15).

11. The disc brake(1) as claimed in patent claims 6-10, **characterized in that** an activating lever (25) is connected in a rotationally fixed manner to the camshaft (19), which activating lever (25) has an end portion (26) designed for actuation by an actuator rod (27) from a power member (not shown).

12. The disc brake (1) as claimed in one or more of the preceding patent claims, **characterized in that** the outer brake-lining holder (10) is articulated so that it can be pivoted upward about one of the suspension axles (29) between a downwardly pivoted operating position and an upwardly pivoted maintenance position for replacing the brake linings (5).

## Patentansprüche

1. Scheibenbremse (1) für Schwernutzfahrzeuge mit
- einer Bremsscheibe (2), die mit einer Radachse (3) dreht,
- einem Bremssattel (4), der auf bewegbare Weise an einem nicht rotierenden Radachsgehäuse angebracht ist, das um die Radachse (3) angeordnet ist,
- zwei Bremsbelägen (5), einer auf jeder Seite der Bremsscheibe (2), wobei die Bremsbeläge (5) so ausgelegt sind, dass sie, wenn sie von einem Aktivierungsmechanismus (8) beaufschlagt werden, zur Anlage gegen die Seiten (9) der Bremsscheibe (2) zur Übertragung eines Bremsmoments auf die Radachse (3) gebracht werden,
- wobei der Bremssattel (4) zwei Bremsbelaghalter (10, 11) umfasst, die axial bezüglich zueinander und bezüglich des Radachsgehäuses (3) verschiebbar sind,
**dadurch gekennzeichnet, dass**
- die Bremsbelaghalter (10, 11) jeweils wenigstens eine Beaufschlagungsfläche (12, 13, 14, 15) für einen Eingriff mit dem Aktivierungsmechanismus (8) haben, weshalb die Bremsbelaghalter (10, 11) bei einer Aktivierung zueinander verschoben werden,
- beide Bremsbelaghalter (10, 11) so angeordnet sind, dass sie entlang zweier gegenseitig parallelen Aufhängungsachsen (29) gleiten, die ebenfalls parallel zu der Radachse (3) sind und in dem Radachsgehäuse befestigt sind, und
- die wenigstens eine Beaufschlagungsfläche (12, 13, 14, 15) zwischen den zwei zueinander parallelen Aufhängungsachsen (29) angeordnet ist.

2. Scheibenbremse (1) nach Anspruch 1, **dadurch gekennzeichnet, dass** die Bremsbelaghalter (10, 11) Befestigungssitze (16) für die Bremsbeläge (5) aufweisen, wobei die Befestigungssitze (16) in einem Abstand von den Beaufschlagungsflächen (12, 13, 14, 15) angeordnet sind.

3. Scheibenbremse (1) nach Anspruch 1 oder 2, **dadurch gekennzeichnet, dass** ein äußerer Bremsbelaghalter (10) so ausgelegt ist, dass er in Axialrichtung der Radachse (3) einen inneren Bremsbelaghalter (11) wenigstens teilweise umgibt.

4. Scheibenbremse (1) nach Anspruch 3, **dadurch gekennzeichnet, dass** die Beaufschlagungsfläche (14, 15) des inneren Bremsbelaghalters (11) in Richtung einer entsprechenden Beaufschlagungsfläche (12, 13) des äußeren Bremsbelaghalters (10) gerichtet ist.

5. Scheibenbremse (1) nach Anspruch 4, **dadurch gekennzeichnet, dass** der Aktivierungsmechanismus (8) bezüglich des Radachsgehäuses (nicht gezeigt) axial festgelegt ist und ein Trennelement (18) umfasst, das zwischen den Beaufschlagungsflächen (12, 13, 14, 15) wirkt, um eine gegenseitige axiale Verschiebung der Bremsbelaghalter (10, 11) zu bezwecken.

6. Scheibenbremse (1) nach Anspruch 5, **dadurch gekennzeichnet, dass** das Trennelement (18) aus einem Nockenelement besteht, wobei das Nockenelement um eine Nockenwelle (19) drehbar ist, die sich im wesentlichen im rechten Winkel zu der Radachse (3) erstreckt.

7. Scheibenbremse (1) nach Anspruch 6, **dadurch gekennzeichnet, dass** das Nockenelement (18) eine sogenannte S-Nocke ist.

8. Scheibenbremse (1) nach Anspruch 6, **dadurch gekennzeichnet, dass** das Nockenelement eine sogenannte Z-Nocke ist.

9. Scheibenbremse (1) nach Anspruch 6, **dadurch gekennzeichnet, dass** das Nockenelement (18) einen keilförmigen Querschnitt aufweist.

10. Scheibenbremse (1) nach Anspruch 6, 7, 8 oder 9, **dadurch gekennzeichnet, dass** Nadelwälzlager (42) zwischen dem Nockenelement (18) und den Beaufschlagungsflächen (12, 13, 14, 15) angeordnet sind.

11. Scheibenbremse (1) nach den Ansprüchen 6 bis 10, **dadurch gekennzeichnet, dass** ein Aktivierungshebel (25) drehfest mit der Nockenwelle (19) verbunden ist, wobei der Aktivierungshebel (25) einen Endabschnitt (26) aufweist, der für eine Beaufschlagung durch eine Beaufschlagungsstange (27) von einem Kraftelement (nicht gezeigt) ausgelegt ist.

12. Scheibenbremse (1) nach einem oder mehreren der vorhergehenden Ansprüche, **dadurch gekennzeichnet, dass** der äußere Bremsbelaghalter (10) so angelenkt ist, dass er nach oben um eine der Aufhängungsachsen (29) zwischen einer nach unten verschwenkten Betriebsstellung und einer nach oben verschwenkten Wartungsstellung für einen Austausch der Bremsbeläge (5) verschwenkt werden kann.

## Revendications

1. Frein à disque (1) pour des véhicules commerciaux lourds, comprenant :
- un disque de frein (2) tournant avec un axe de roue (3),
- un étrier de frein (4) qui est monté d'une manière mobile dans un boîtier d'axe de roue non rotatif agencé autour dudit axe de roue (3),
- deux garnitures de frein (5), une de chaque côté du disque de frein (2), lesdites garnitures de frein (5) étant conçues d'une manière telle que lorsqu'elles subissent l'action d'un mécanisme d'activation (8), elles sont amenées à appuyer contre les côtés (9) du disque de frein (2) pour transmettre un couple de freinage à l'axe de roue (3),
- ledit étrier de frein (4) comprenant deux supports de garniture de frein (10, 11) qui peuvent être déplacés axialement l'un par rapport à l'autre et par rapport au boîtier d'axe de roue (3), **caractérisé en ce que**
- les supports de garniture de frein (10, 11) ont chacun au moins une surface d'actionnement (12, 13, 14, 15) pour une mise en prise avec ledit mécanisme d'activation (8), en résultat de quoi les supports de garniture de freins (10, 11) sont déplacés l'un vers l'autre lors d'une activation,
- les supports de garniture de frein (10, 11) sont tous les deux agencés de manière à coulisser le long de deux axes de suspension mutuellement parallèles (29) qui sont de la même manière parallèles à l'axe de roue (3), et sont fixés dans le boîtier d'axe de roue, et
- la au moins une surface d'actionnement (12, 13, 14, 15) est agencée entre les deux axes de suspension mutuellement parallèles (29).

2. Frein à disque (1) selon la revendication 1, **caractérisé en ce que** les supports de garniture de frein (10, 11) ont des sièges de fixation (16) pour lesdites garnitures de frein (5), lesquels sièges de fixation (16) sont placés à une distance desdites surfaces d'actionnement (12,13, 14, 15).

3. Frein à disque (1) selon la revendication 1 ou 2, **caractérisé en ce qu'**un support de garniture de frein extérieur (10) est conçu de telle sorte que dans la direction axiale de l'axe de roue (3), il entoure au moins partiellement un support de garniture de frein intérieur (11).

4. Frein à disque (1) selon la revendication 3, **caractérisé en ce que** la surface d'actionnement (14, 15) du support de garniture de frein intérieur (11) est dirigé vers une surface d'actionnement correspondante (12, 13) du support de garniture de frein extérieur (10).

5. Frein à disque (1) selon la revendication 4, **caractérisé en ce que** ledit mécanisme d'activation (8) est fixé axialement par rapport au boîtier d'axe de roue (non représenté), et comprend un élément de séparation (18) agissant entre lesdites surfaces d'actionnement (12, 13, 14, 15) dans le but d'un déplacement axial mutuel des supports de garniture de frein (10, 11).

6. Frein à disque (1) selon la revendication 5, **caractérisé en ce que** ledit élément de séparation (18) est constitué d'un élément formant came, lequel élément formant came peut tourner autour d'un vilebrequin (19) s'étendant sensiblement à angle droit par rapport à l'axe de roue (3).

7. Frein à disque (1) selon la revendication 6, **caractérisé en ce que** ledit élément formant came (18) est ce qu'on appelle une came en S.

8. Frein à disque (1) selon la revendication 6, **caractérisé en ce que** ledit élément formant came est ce qu'on appelle une came en Z.

9. Frein à disque (1) selon la revendication 6, **caractérisé en ce que** ledit élément formant came (18) a une coupe transversale en forme de cale.

10. Frein à disque (1) selon la revendication 6, 7, 8 ou 9, **caractérisé en ce que** des roulements à aiguilles (42) sont placés entre l'élément formant came (18) et les surfaces d'actionnement (12, 13, 14, 15).

11. Frein à disque (1) selon les revendications 6 à 10, **caractérisé en ce qu'**un levier d'activation (25) est relié d'une manière fixe en rotation sur le vilebrequin (19), lequel levier d'activation (25) a une partie d'extrémité (26) conçue pour un actionnement par une tige d'actionneur (27) à partir d'un élément de puissance (non représenté).

12. Frein à disque (1) selon l'une quelconque des revendications précédentes, **caractérisé en ce que** le support de garniture de frein extérieur (10) est articulé de sorte qu'il peut être pivoté vers le haut autour d'un des axes de suspension (29) entre une position de fonctionnement pivotée vers le bas et une position d'entretien pivotée vers le haut pour un remplacement des garnitures de frein (5).
